(19) Europäisches Patentamt

European Patent Office

Office européen des brevets

(11) Veröffentlichungsnummer : **0 338 983 B1**

(12) **EUROPÄISCHE PATENTSCHRIFT**

(45) Veröffentlichungstag der Patentschrift :
**01.09.93 Patentblatt 93/35**

(51) Int. Cl.⁵ : **C09J 5/08,** C08J 9/08,
**E21D 20/02**

(21) Anmeldenummer : **89810264.5**

(22) Anmeldetag : **06.04.89**

(54) **Verwendung von Zweikomponenten-Reaktionsharzen für Befestigungszwecke.**

(30) Priorität : **16.04.88 DE 3812814**

(43) Veröffentlichungstag der Anmeldung :
**25.10.89 Patentblatt 89/43**

(45) Bekanntmachung des Hinweises auf die
Patenterteilung :
**01.09.93 Patentblatt 93/35**

(84) Benannte Vertragsstaaten :
**AT BE CH DE ES FR GB IT LI NL SE**

(56) Entgegenhaltungen :
**GB-A- 652 770
CHEMICAL ABSTRACTS, Band 83, 1975, Seite
54, Zusammenfassung Nr. 194435c, Columbus, Ohio, US; & JP-A-75 21 060**

(56) Entgegenhaltungen :
**CHEMICAL ABSTRACTS, Band 96, 1982, Seite
324, Zusammenfassung Nr. 167615y, Columbus, Ohio, US; & JP-A-81 169 165
CHEMICAL ABSTRACTS, Band 95, 1981, Seite
36, Zusammenfassung Nr. 44176c, Columbus,
Ohio, US; & JP-A-81 16 530
CHEMICAL ABSTRACTS, Band 95, 1981, Seite
47, Zusammenfassung Nr. 116604r, Columbus,
Ohio, US; & JP-A-81 62 814**

(73) Patentinhaber : **HILTI Aktiengesellschaft
FL-9494 Schaan (LI)**

(72) Erfinder : **Gebauer, Ludwig
Eulenweg 6
D-8037 Olching 2 (DE)**

(74) Vertreter : **Wildi, Roland
Hilti Aktiengesellschaft Patentabteilung
FL-9494 Schaan (LI)**

EP 0 338 983 B1

## Beschreibung

Es ist bekannt, Zweikomponenten-Reaktionsharze als Befestigungsmittel, zB zur Befestigung von Ankerstangen in Bohrlöchein, einzusetzen. Meistens werden hierbei Zweikammer-Kartuschen verwendet, wobei die Wandungen der Kartuschen aus leicht zerstörbarem Material bestehen oder es werfen Doppelkartuschen mit Statikmischer verwendet. Im einen Fall erfolgt das für die Härtung erforderliche Mischen der beiden Komponenten meist unter Zuhilfenahme des Verankerungsmittels durch Mischen des Kartuscheninhalts nach Zerstörung der Kartuschenwandungen oder durch Mischen der beiden Komponenten im Statikmischer und Verwendung des so erhaltenen Gemischs für den jeweiligen Befestigungszweck. Die Verwendung von Reaktionsharzmassen, zB bei Befestigungen in Hohlkammerstein, in ausgeschlagenen Bohrlöchern oder in zerklüfteten Werkstoffen macht den Einsatz erheblicher Mengen an Harzmassen erforderlich. Es ergibt sich daraus ein hoher Verbrauch an Rohstoff mit entsprechend kostenaufwendiger Herstellung, Verpackung, Transport und Lagerung. Bisweilen sind für einen Befestigungsvorgang mehrere Zweikammer-Kartuschen erforderlich oder es sind mit einer Doppelkartusche nur wenige Befestigungspunkte herstellbar.

Der vorliegenden Erfindung liegt die Aufgabe zugrunde, diese Nachteile zu vermeiden und dafür Sorge zu tragen, dass mit vergleichsweise geringeren Mengen an Reaktivharz-Mörtelmassen eine höhere Anzahl von Befestigungspunkten hergestellt werden kann, ohne fass die Qualität der Befestigung leidet.

Erfindungsgemäss gelingt dies durch Verwendung von verschäumbaren, radikalisch härtbaren Zweikomponenten-Reaktionsharzen, die als Verschäumungsmittel anorganisches Carbonat in einer Menge von 5 - 50 Gew.-% und Polycarbonsäure in einer Menge von 1 - 10 Gew.-%, jeweils bezogen auf die Gesamtmörtelmasse, enthalten als Mörtelmasse zur Befestigung von Ankerstangen und dergleichen Verankerungsmitteln in Bohrlöchern.

Es sind zwar schon verschäumbare Zweikomponenten-Reaktionsharzmörtel für Befestigungszwecke, die als Verschäumungsmittel ein Alkalicarbonat und Ameisensäure enthalten, bekannt (CA 95, 1981, 44176c und 116604r). Die ausgehärteten Mörtel zeigen jedoch unbefriedigende Festigkeitswerte, insbesondere ein schlechtes Zeitstandsverhalten.

Durch die Verschäumung der radikalisch härtbaren Reaktionsharze am Einsatzort gelingt es, ein nutzloses Verlaufen der Reaktionsharze in Hohlräumen, Klüften und dergleichen zu vermeiden, wobei einerseits durch die gute Festigkeit der gebildeten Hartschäume und andererseits durch Erzeugung von Formschluss unter dem Druck des Verschäumungsmittels voll befriedigende Befestigungen erzielbar sind.

Als Reaktionsharze können die üblichen bekannten, radikalisch härtbaren Reaktionsharze, zB ungesättigte Polyesterharze in Reaktivverdünnern, wie Styrol, Vinylester, namentlich die Reaktionsprodukte von Bisphenolen und Novolak mit ungesättigten Carbonsäuren, wie Acrylsäure,.insbesondere gelöst in Reaktivverdünnern, wie Styrol, weitere Acrylatharze und dergleichen verwendet werden. Bevorzugt sind Vinylesterharz oder auch Gemische von Vinylesterharzen mit ungesättigten Polyesterharzen.

Als Härter für die radikalisch härtbaren Reaktionsharze können die üblichen peroxidischen Verbindungen, wie Dibenzoylperoxid, Cumolhydroperoxid und dergleichen Verbindungen verwendet werden. Regelmässig sind die Peroxidverbindungen in organischen Phlegmatisierungsmitteln, namentlich Phtalsäureestern, meist in Mengen von ca. 40 bis 60 Gew.-% enthalten. Bevorzugt ist die Verwendung der peroxidischen Härter in organischen Phlegmatisierungsmitteln.

Die in den erfindungsgemäss verwendeten verschäumbaren, radikalisch härtbaren Zweikomponenten-Harzmassen enthaltenen Verschäumungsmittel umfassen eine Kombination aus anorganischen Carbonaten mit organischen Polycarbonsäuren. Vor dem Vermischen des Reaktionsharzes mit dem Härter sind das anorganische Carbonat einerseits und die Polycarbonsäure andererseits meist voneinander getrennt, derart, daß das Carbonat in dem einen, die organische Carbonsäure im anderen Bestandteil des Zweikomponentensystems enthalten ist. Jedoch kann die Verschäumungskombination Carbonat/Polycarbonsäure, z. B. als Trockengemisch, auch in dem einen der beiden Bestandteile des Zweikomponentensystems enthalten sein. Beim Mischen mit dem anderen Bestandteil des Zweikomponentensystems wird dann, z. B. unter Zutritt von Wasser, die Verschäumung ausgelöst.

Die Polycarbonsäuren müssen einen ausreichenden pH-Wert aufweisen, um unter Mischbedingungen aus dem Carbonat das als Verschäumungsmittel wirkende Kohlendioxid freizusetzen. Zu dem Bestandteil der Verschäumungsmittel bildenden Polycarbonsäuren gehören Polyacrylsäuren und deren Derivate, wie z. B. Polymethacrylsäure, Copolymerisate aus Acrylsäure und/oder Methacrylsäure mit Itaconsäure und/oder Maleinbzw. Fumarsäure und/oder Acrolein, bevorzugt Carbonsäuren, die selbst polymerisierbar oder copolymerisierbar sind, aber auch Carboxymethylcellulose (Säureform), Alkyl- oder Acrylpolycarbonsäuren und dergleichen. Als anorganische Carbonate sind andererseits solche Carbonate bevorzugt, die unter Abgabe von Kohlendioxid leicht zersetzlich sind, insbesondere die Carbonate mehrwertiger Verbindungen. Als anorganische Carbonate haben sich insbesondere die Carbonate mehrwertiger Metalle, z. B. Calciumcarbonat (Kreide, Calcit), Magnesiumcarbonat, Magnesiumhydroxidcarbonat, Calcium-Magnesiumcarbonat (Dolomit), Zinkcarbonat, Zinkhydroxidcarbonat und dergleichen bewährt. Die Verwendung von Carbonaten mehrwertiger Metalle hat den Vorteil, daß nach der Zersetzung des Carbonats mit den organischen Polycarbonsäuren unter Freisetzung des Kohlendioxids die verbleibenden Metallionen mit den Carboxylsäuregruppen der organischen Carbonsäuren Carboxylatgruppen bilden und die so gebildeten Verbindungen zu einer Vernetzung und damit zu einer Erhöhung der Festigkeit des ausgehärteten Mörtels führen.

Die Reaktionsharze liegen meistens zusammen mit reaktionsfähigen, Vinylgruppen enthaltenden Verbindungen, insbesondere mit gleichzeitig als Lösungsmittel dienenden derartigen Verbindungen, wie Styrol oder dergleichen Reaktionsverdünnern vor. Dies gilt insbesondere für ungesättigte Polyesterharze und Vinylesterharze, die in derartigen Reaktivverdünnern im allgemeinen in Mengen von 40 bis 60 Gew.-% enthalten sind. Soweit nachfolgend Mengenangaben bezüglich Reaktionsharzen gemacht sind, beziehen sich diese Mengenangaben in üblicher Weise auf derartige Gemische bzw in Fällen wo derartige Vinylbestandteile neben dem eigentlichen Reaktionsharz nicht erwünscht oder nicht erforderlich sind, zB bei Acrylatharzen, auf die Harze als solche.

Die erfindungsgemäss verwendeten Mörtelmassen können Füllstoffe, wie Stapelfasern, Glaskurzfasern, Glasflocken, Quarzsand, Quarzmehl, Glas-/Flugaschekugeln, Glas-/Flugaschehohlkugeln und dergleichen enthalten, wobei bei Verwendung derartiger Hohlkugeln die Mörtelmassen, trotz geringen spezifischen Gewichts, ausgezeichnete Festigkeitseigenschaften aufweisen.

Weiter können Thixotropiermittel enthalten sein, wie zB gegebenenfalls organisch nachbehandelte pyrogene Kieselsäure, Bentonite, Methylcellulosen, Rhizinusölderivate, wobei pyrogene Kieselsäure regelmässig bevorzugt ist.

Ein Gehalt an grenzflächenaktiven Substanzen hat sich als günstig erwiesen, weil sie einerseits die homogene Mischbarkeit der beiden Komponenten des Zweikomponenten-Systems erleichtern, häufig den Schaum bis zum Gelieren der Reaktionsharzanteile stabilisieren und zudem eine benetzende Wirkung sowohl gegenüber dem Aufnahmewerkstoff, als auch gegenüber dem Verankerungsmittel, wie Ankerstangen und dergleichen ausüben. Als Emulgatoren haben sich insbesondere solche vom Typ Wasser-in-Oel bewährt. Als Schaumstabilisatoren können insbesondere Verbindungen auf der Basis von Polysiloxanen eingesetzt werden.

Die erfindungsgemäss verwendeten Mörtelmassen können organische oder anorganischer Lösungsmittel, insbesondere Wasser und dergleichen enthalten. Weiter hat sich die Verwendung von Beschleunigern, insbesondere von Aminbeschleunigern bewährt, ebenso wie die Verwendung von Stabilisatoren, wie Chinonen oder Hydrochinonen. Neben oder anstelle von Füllstoffen können auch anorganische oder organische Streckmittel enthalten sein, wie mineralischer Art, feinteiliger Grit, Gesteinsmehl und dergleichen.

Nach dem Vermischen der beiden Komponenten laufen unabhängig voneinander zwei Reaktionen ab, nämlich die radikalische Polymerisation der Reaktionsharze, die in üblicher Weise durch das, gegebenenfalls Beschleuniger enthaltende, peroxidische Härtersystem initiiert wird. Die Aushärtezeit kann dabei in üblicher Weise durch mit und Menge der Peroxide und der Beschleuniger, zB Aminbeschleuniger, durch Inhibitoren, wie zB t-Butyl-Brenzcatechin usw. gesteuert werden.

Daneben läuft die Verschäumungsreaktion durch die Reaktion von Polycarbonsäuren mit anorganischem Carbonat unter Freisetzung von gasförmigem Kohlendioxid. Die Geschwindigkeit der Schaumbildung kann sowohl durch Art und Menge der jeweils eingesetzten Treibmittel, zB durch Art, Menge und Korngrösse des Carbonats, durch Art und Menge der Polycarbonsäuren, namentlich durch deren PH-Wert und durch die Wassermenge gesteuert werden.

Es hat sich als zweckmässig erwiesen, fass die Schäumreaktion vor der Gelier- oder noch in der beginnenden Gelierphase des Reaktionsharzes im wesentlichen beendet ist. Das Aufschäumverhältnis kann beliebig gesteuert werden, Werte im Bereich von 1:1,5 bis 1:7 haben sich besonders bewährt.

Der Erläuterung der Erfindung dienen die nachfolgende Rahmenrezeptur sowie die zwei Ausführungsbeispiele:

Rahmenrezeptur

(Prozentangaben beziehen sich auf die Gesamtrezeptur)

Komponente A:

Reaktionsharz:              40 - 80 %
Anorganisches Carbonat:     5 - 50 %
Füllstoff:                  5 - 50 %
Thixotropiermittel:         1 -  7 %
Grenzflächenaktive
Substanzen (Emulgator,
Schaumstabilisator):        0 -  3 %

Komponente B:

Dibenzoylperoxid:           0,5 -  4 % *)
Polymere Carbonsäure:       1   - 10 %
Wasser:                     2   - 10 %
Thixotropiermittel:         0,1 -  1 %
Grenzflächenaktive
Substanz(en) (Emulgator,
Schaumstabilisator):        0 -  1 %
Füllstoff:                  0 - 10 %

*)    bezogen auf 100 %iges Dibenzoylperoxid. Sofern mit
      organischen Phlegmatisierungsmitteln, zB Phtalsäure-
      estern, formulierte Peroxidzubereitungen verwendet
      werden, enthält die Gesamtrezeptur zusätzlich
      0,5 - 5 % des Phlegmatisierungsmittels.

Ausführungsbeispiel 1

Komponente A:

Ungesättigtes Polyesterharz,
aminvorbeschleunigt,
Styrolgehalt 35 %                                        47,5 %

Quarzmehl, 1600 mesh                                     26,0 %

Glaskurzfasern, Länge 0,3 mm                              4,0 %

Flugasche-Hohlkugeln,
mittlerer Teilchendurchmesser 0,12 mm,
Schüttdichte 410 kg/m$^3$                                10,0 %

Calciumcarbonat (Calcit),
Teilchendurchmesser 5 μm                                 10,0 %

Pyrogene Kieselsäure                                      2,5

Komponente B:

Dibenzoylperoxid, 50 %
in Phtalsäureester                                       28,0 %

Polyacrylsäure                                           22,5 %

Wasser                                                   29,5 %

Flugasche-Hohlkugeln                                     15,0 %

Pyrogene Kieselsäure                                      5,0 %

Mischungsverhältnis:    1 Gewichtsteil Komponente B auf
                        9 Gewichtsteile A

Steigzeit:              4 min

Volumensvergrösserung:  2,5-fach (freigeschäumt)

Gelierzeit:             5 min

Aushärtezeit:           1 h

Ausführungsbeispiel 2

Komponente A:

Ungesättigtes Polyesterharz,
aminvorbeschleunigt,
Styrolgehalt 30 %                               56,4 %

Siloxan-Glycol-Copolymer
(Schaumstabilisator)                            0,6 %

Quarzmehl 1600 mesh                             6,0 %

Glaskurzfasern                                  4,0 %

Calciumcarbonat (Kreide),
Teilchendurchmesser 1 µm                        30,0 %

Pyrogene Kieselsäure                            3,0 %

Komponente B:

| | |
|---|---|
| Dibenzoylperoxid 50 %<br>in Chlorparaffin | 20,0 % |
| Polyacrylsäure | 40,0 % |
| Wasser | 24,0 % |
| Quarzmehl 1600 mesh | 10,0 % |
| Pyrogene Kieselsäure | 6,0 % |

| | |
|---|---|
| Mischungsverhältnis: | 1 Gewichtsteil Komponente B auf<br>7 Gewichtsteile A |
| Steigzeit: | 6 min |
| Volumenvergrösserung: | 5-fach (freigeschäumt) |
| Gelierzeit: | 8 min |
| Aushärtezeit: | 1,5 h |

Die Rezepturen beider Ausführungsbeispiele sind geeignet zur Verarbeitung aus üblichen Doppelkartuschen mit Statikmischern in einem Volumenverhältnis der Komponenten A zu B von 7:1. Sie können für Verankerungen in Hohlkammersteinen in Verbindung mit handelsüblichen Gewindestangen, Gewindehülsen und Siebhülsen eingesetzt werden.

Ein Anwendungsbeispiel einer Verankerung in Hohlkammersteinen mit der Rezeptur nach Ausführungsbeispiel 1 besteht darin, dass ein Bohrloch mit Durchmesser 16 mm und Tiefe 90 mm hergestellt wird. In dieses Bohrloch wird eine Siebhülse von 15 mm Durchmesser und 80 mm Länge aus Drahtgeflecht mit einer Drahtstärke von 0,5 mm und einer Maschenweite von 1 mm eingeführt. In die Siebhülse werden 15 cm$^3$ Mörtelmasse injiziert und anschliessend eine Gewindestange M 12 eingesetzt. Durch das Aufschäumen und Aushärten der Mörtelmasse bildet sich eine formschlüssige Verankerung, in dem aus Hohlkammersteinen gebildeten Untergrund.

Für eine zu diesem Anwendungsbeispiel analoge Verankerung mit den bisher bekannten nicht schäumenden Mörtelmassen wäre ein Volumen von mindestens 30 cm$^3$ Mörtelmasse erforderlich.

## Patentansprüche

1. Verwendung verschäumbarer radikalisch härtbarer Zweikomponenten-Reaktionsharze, die als Verschäumungsmittel anorganisches Carbonat in einer Menge von 5 - 50 Gew.-% und Polycarbonsäure in einer Menge von 1 - 10 Gew.-%, jeweils bezogen auf die Gesamtmörtelmasse, enthalten als Mörtelmasse zur Befestigung von Ankerstangen und dergleichen Verankerungsmitteln in Bohrlöchern.

2. Verwendung gemäss Patentanspruch 1, dadurch gekennzeichnet, dass die Mörtelmasse 35 - 85 Gew.-%, vorzugsweise 40 - 80 Gew.-% Reaktionsharz, 0,1 - 5 Gew.-%, vorzugsweise 0,5 - 4 Gew.-% peroxidischen Härter, und 2,5 - 62 Gew.-%, vorzugsweise 5 - 60 Gew.-% Verschäumungsmittel, jeweils bezogen auf die Gesamtmörtelmasse, sowie gegebenenfalls Reaktivverdünner, Füllstoffe, Thixotropiermittel, grenzflächenaktive Substanzen, Schaumstabilisatoren, Lösungsmittel, Beschleuniger, Streckmittel und/oder Stabilisatoren enthält.

## Claims

1. Use of foamable radically hardening two-component reactive resins, containing as foaming media inorganic carbonate in a quantity of between 5 and 5Ø percent by weight, and polycarboxylic acid in a quantity of between 1 and 1Ø percent by weight, both relative to the total of mortar mass, as a mortar mass for fixing armature rods and anchoring means of this type in bore holes.

2. Use according to patent claim 1, **characterised in that** the mortar mass contains between 35 and 85 percent by weight, preferably between 4Ø and 8Ø percent by weight, of reactive resin, between Ø.1 and 5 percent by weight, preferably between Ø.5 and 4 percent by weight, of peroxide hardener, and between 2.5 and 62 percent by weight, preferably between 5 and 6Ø percent by weight, of foaming media, all relative to the total of mortar mass, and if appropriate reactive thinners, fillers, thixotropic media, interface-active substances, foam stabilizers, solvents, catalists, extenders and/or stabilizers.

## Revendications

1. Utilisation comme masse de mortier pour la fixation de boulons d'ancrage et organes d'ancrage similaires dans des trous de perçage, de résines moussables, durcissables par voie radicalaire, obtenues par réaction de deux composants, qui contiennent comme agent de moussage un carbonate inorganique en une proportion de 5-50% en poids et un acide polycarboxylique en une proportion de 1-10% en poids, lesdites proportions étant rapportées à la masse totale de mortier.

2. Utilisation selon la revendication 1, caractérisée par le fait que la masse de mortier contient 35-85% en poids, de préférence 40-80% en poids de ladite résine, 0,1-5% en poids, de préférence 0,5-4% en poids, d'un péroxyde durcisseur, et 2,5-62% en poids, de préférence 5-60% en poids, d'un agent de moussage, lesdites proportions étant rapportées à la masse totale de mortier, ainsi que, le cas échéant, des diluants réactifs, des charges, des agents thixotropes, des substances tensio-actives, des stabilisateurs de mousse, des solvants, des accélérateurs, des diluants et/ou des agents stabilisants.